# EUROPEAN PATENT APPLICATION

(11) **EP 1 355 179 A2**
(43) Date of publication of application: **22.10.2003**
(21) Application number: 02016837.3
(22) Date of filing: 29.07.2002
(51) Int. Cl.: G02B 6/42, H01L 33/00

(54) **Optical module equipped with a wiring plate**

(30) Priority: 15.04.2002 JP 2002111457
(71) Applicant: OpNext Japan, Inc., Yokohama-shi, Kanagawa 244-1564 (JP)
(72) Inventor: Sasaki, Hiroyasu, Hitachi, Ltd., Intell. Prop. Gr., Chiyoda-ku, Tokyo 100-8220 (JP); Okayasu, Masanobu, OpNext Japan, Inc., Yokohama-shi, Kanagawa, 244-1564 (JP); Kuwano, Hideyuki, OpNext Japan, Inc., Yokohama-shi, Kanagawa, 244-1564 (JP)
(74) Representative: Strehl Schübel-Hopf & Partner

(57) **Abstract**

In an optical module including an optical element and a semiconductor IC for driving it in a case, a metal stem (35) on which an optical element (10) is mounted is provided with a wiring plate (11), a semiconductor IC (30) for electrically driving the optical element (10), and the wiring plate (11) are connected with each other by wires (16), and further the wiring plate (11) and the optical element (10) are connected with each other by the wires (16). The optical communication module having excellent high frequency characteristics is formed that shuts out influence of heat from the semiconductor IC upon the optical element and causes no interference between the semiconductor IC and optical connecting lenses.

## Description

### BACKGROUND OF THE INVENTION

### 1. Field of the Invention

The present invention relates to an optical module. To be more specific, the present invention relates to an optical module including electronic circuit parts such as a semiconductor optical element and a semiconductor IC in one package, and more particularly to an optical communication module used in communication systems.

### 2. Description of the Related Art

Presently, the dominating transmission medium used in basic communications is an optical fiber, and to address an increase in communication traffic, speed-enhancement and multiplexing technologies are pushed forward so that more information can be transmitted through one optical fiber. In this situation, smaller sizes and lower costs, as well as high performance, are demanded for hardware constituting communication networks. For this reason, in optical communication modules to perform light-electricity transformation, there is an increasing need to include an amplifier circuit and a driving circuit together with an optical element in an identical package.

Semiconductor elements such as semiconductor laser to transform electrical signal to light, and semiconductor modulators greatly change in characteristics and operating life, depending on temperature. For this reason, optical communication modules requiring stable wavelength and long operating life have such a structure that these semiconductor elements are mounted on Peltier elements. On the other hand, since semiconductor ICs such as an amplifier circuit and a driving circuit are heating sources, it is uncommon to include the semiconductor ICs and the above described optical elements in an identical case.

However, to achieve high speed transmission of signals, it is more advantageous in terms of high frequency signal transmission to dispose and connect a semiconductor IC constituting an amplifier circuit and a driving circuit, and the above described optical elements in proximity to each other, and therefore including both in an identical case is desired. This is also advantageous in terms of costs because the number of parts is reduced. Therefore, an optical module is proposed which has such a structure that a pedestal for mounting a semiconductor optical element and a pedestal for mounting a semiconductor IC are separated from each other to thermally isolate the semiconductor IC and the semiconductor optical element from each other, and the semiconductor IC and the optical element are disposed in proximity to each other and directly connected with each other by wire bonding to obtain satisfactory high frequency characteristics.

Examples of optical modules are described below.
(1) An optical module constructed so that a semiconductor laser diode (hereinafter referred to as LD) and a driver IC are directly mounted on heat sinks, and the LD and the driver IC are directly connected with each other by wire bonding. The heat release property is increased by directly mounting the IC on a heat sink, and an internal wiring substrate is shaped so that the LD and the driver IC are disposed in proximity to each other and directly connected with each other, thereby enabling superspeed signal transmission (e.g., JP-A-247758/1998).
(2) An optical module constructed so that the LD is disposed at an end of the rear of a Peltier element, an LD driver is disposed outside the rear of the Peltier element, and the LD and the LD driver are directly connected by wire bonding. The direct connection between the LD and the LD driver enables high speed operation without using a terminal resistance and reduces heat load due to heating of the terminal resistance (e.g., JP-A-247757/1998).
(3) An optical module constructed so that an optical element, an amplifying element, and a signal input terminal are almost linearly disposed within the module housing, and the amplifying element and the optical element are directly connected by a metal wire. Direct connection between the amplifying element and the optical element by the metal wire increases high frequency characteristics (e.g., JP-A-91695/2000).

Any of the above described conventional optical modules enables high speed signal transmission by directly connecting the driver IC and the LD by wire bonding.

The above described conventional optical modules ignore a quantity of heat traveling through the wire directly connected from the semiconductor IC to the optical element because of high heat resistance of the wire. However, for use with signals of higher frequencies, a wire whose cross section is not of circular shape but ribbon shape is used to reduce inductance components of the wire, and its wire length must be made shorter. The heat resistance of a wire of ribbon shape becomes small and the quantity of heat entering the optical element through the wire becomes large. Hereinafter, influence of the quantity of heat travelling through the wire is estimated.

The heat resistance of a metal wire, usually often used, 25 µm in diameter and 1 mm in length is about 6500 (K/W), while the heat resistance of a metal ribbon wire 25 x 50 µm in cross-sectional area and 1 mm in length is about 2600 (K/W). If the wire length is shortened to improve high frequency transmission characteristics, the heat resistance becomes smaller.

A large part of heat travelling through the wire flows through other than an element active region (a light-emitting region in the case of LD) under an optical element connection pad, and a part of it flows into the active region of the optical element. If the quantity of heat flowing into the active region is assumed to correspond to a ratio of the area of an electrode connected to the active region and an electrode including the pad, it is estimated as 5 or 10%. Heat resistance from the active region to a substrate on which the optical element is mounted is about 60 to 120 (K/W), and if a temperature difference between the optical element and the semiconductor IC is 60 degrees, with connection by a metal wire having a circular cross section, the active region of the element increases from about several hundredths to 0. 1 degree in temperature due to heat invasion by the wire. This value is negligible as described in documents described with regard to the conventional optical modules. However, if connection is made by a metal ribbon 0.5 mm long to improve high frequency transmission characteristics, a temperature increase in the active region is 0.1 or 0.5 degrees.

In a semiconductor laser element of DFB structure, since wavelength change of 0.1 nm occurs for each one degree of temperature, a maximum wavelength of 0.05 nm occurs. This value is such a large value that cannot be ignored in comparison with 0.8 or 0.4 nm, which is a wavelength interval usually used in multiple-wavelength optical communications. In the optical module using such a short ribbon wire, since the inflow of heat into the optical element through the wire exerts a bad influence on the characteristics of the optical element, the heat inflow into the optical element must be eliminated or reduced. The heat inflow has not been taken into account in conventional optical modules because it has been a trivial problem.

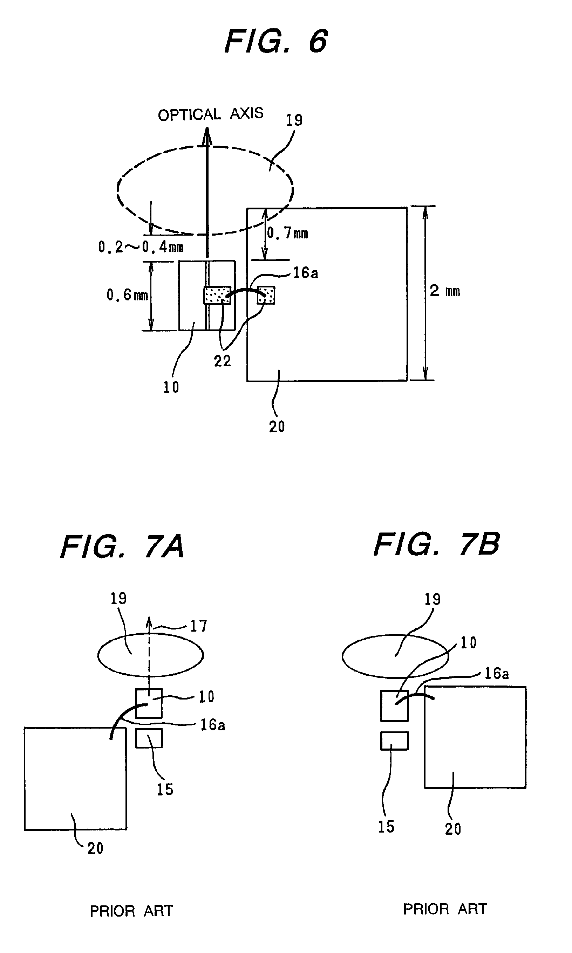

In conventional optical modules, as shown in FIGS. 7A and 7B, with the optical axis direction 17 of an optical connecting lens 19 being forward, a semiconductor IC 20 is disposed in a slanting direction (7A) or at a side (7B) of the rear of the optical element 10, a connecting wire 16a is connected to the optical element 10 in the vicinity of a vertex of a rectangular chip of the semiconductor IC 20, and the lens 19 and a photo-diode 15 used for monitoring quantity of light are disposed in the periphery of the optical element 10.

For use at high frequencies, for the reason described below, a signal terminal (electrode pad) of the semiconductor IC is often disposed in the center of a side of the chip, in which case the wirings shown in FIGS. 7A and 7B are difficult to make. Since a circuit form of differential amplifying is used as a circuit, signal circuit elements of normal and anti-phase are disposed symmetrically within the semiconductor CI, and accordingly two connecting terminals are provided for normal phase and anti-phase. A function part of the semiconductor IC is disposed in the center of the IC chip for the reasons of heat release and wiring convenience. A wiring pattern is formed so that a wiring part from the function part to the connecting pad at an outer edge of the IC chip is a coplanar transmission line with ground lines symmetrically disposed at both sides of the signal terminal.

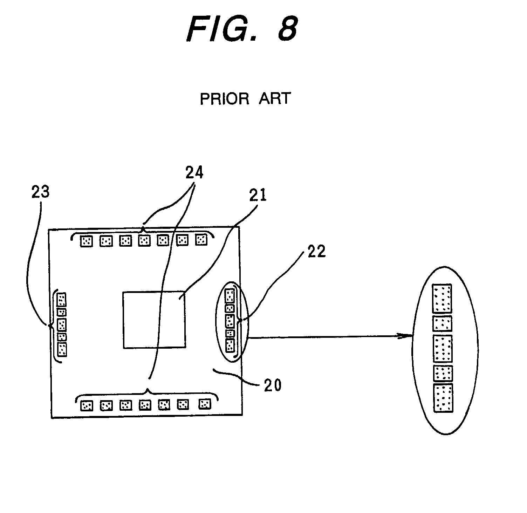

For this reason, wiring from the function part of IC of thin wiring rule to the connecting pad is made by wedge-shaped plural wiring patterns that become gradually thicker. To connect signals of normal and anti-normal by a coplanar transmission line requires five wires, and if signals of normal and anti-normal are to be treated equally, and signal and ground wiring lengths are to be made almost equal, a signal connecting pad must be disposed in the-center of an edge of the IC chip 20, as shown in FIG. 8. At the right side of the chip are provided output electrode pads 22 comprising five electrodes - ground terminal 22G, anti-phase signal terminal 22R, ground terminal 22G, normal-phase signal terminal 22S, and ground terminal 22G, and at the left side of the chip are provided input electrode pads 23 having the same configuration as the output electrode pads. In the center of the chip is provided a function region 21 having a signal amplification function and other functions; the width of wiring within the function region 21 is about 1 µm. The sizes of the output electrode pads 22 and the input electrode pads 23 are from several tens of µm to about 100 µm, and for this reason, connections from the function region 21 to the output electrode pads 22 and the input electrode pads 23 are made by wedge-shaped wiring patterns (not shown) that become gradually thicker in line, and the wiring patterns form a coplanar transmission line. Electrode pads 24 for power supply and control are disposed on and under the chip.

If such a semiconductor IC and the optical element are directly connected with each other by wire bonding with reduced wire length, interference occurs between the IC and the optical connecting lens disposed in front of the optical element, as described below. FIG. 6 is a diagram for explaining the interference.
(1) The length of a side on which an output terminal of the semiconductor IC 20 to the optical element 10 exists is e.g., 2 mm and an output terminal pad 22 to the optical terminal is in the center of the side.
(2) The length of the optical element 10 is 0.6 mm and a connection electrode pad 22 exists at a central position thereof.
(3) If an optical connecting dedicated lens for semiconductor laser is used as the optical connecting lens 19 disposed in front of the optical element 10, an operating distance of the lens at the optical element side, that is, the interval between an end face of the optical element and the lens surface is 0.2 to 0.4 mm.

To connect the optical element and the IC by the shortest wire, both a connecting pad of the optical element and a connecting pad of the IC must be disposed perpendicularly to the optical axis of the optical element. If they are so disposed, the above described (1) and (2) dictate that the edge of a lateral side of the IC is at a distance of 0.7 mm from the front of the optical element. In such a case, the above described (3) dictates that the IC and the lens will occupy an identical position; actually such a disposition cannot be realized without processing the lens.

### SUMMARY OF THE INVENTION

An object of the present invention is to provide an optical module including a semiconductor IC suitable for high speed operation that eliminates characteristic change due to heat entering an optical element through a connecting wire from a semiconductor IC and achieves connection between the semiconductor IC having signal output terminal pads in the center of a side of a chip, and the optical element without interference with a lens.

To achieve the above object, the optical module according to the present invention is constructed so that a wiring plate for signal connection is disposed between the semiconductor IC and the optical element, output of the semiconductor IC is connected to an electrode pad of the optical element through the wiring of the wiring plate, and the wiring plate is mounted on a metal base (stem) along with the optical element.

According to a preferred embodiment of the optical module of the present invention, the optical element is mounted on the metal stem disposed on a Peltier element to stabilize its characteristics, and on the metal stem are mounted an optical connecting lens for inputting light emitted from the optical element to an optical fiber and a thermistor for detecting temperature of the metal stem and controlling the Peltier element so that the metal stem is constant in temperature. In the case where the optical element is a light emitting element such as semiconductor laser, a photo-diode used for monitoring quantity of light that detects a light quantity and controls light output is disposed in the rear of the light emitting element. In the case where the optical element is an optical modulating element that modulates and outputs inputted light, in place of the photo-diode disposed for the above described light emitting element, an optical connecting lens is disposed for inputting continuous light to be modulated to the optical element.

On the periphery of the semiconductor IC, a wiring substrate is provided for power supply to the semiconductor IC and connection of control signals and the like. The semiconductor IC and the wiring substrate are mounted on a metal block different from a stem (metal material) on which the optical element is mounted, and on a bottom plate of the case of the optical communication module are disposed the Peltier element on which the stem equipped with the optical element and the like is mounted, and the metal block equipped with the semiconductor IC. With this construction, heat is isolated between the semiconductor IC and the optical element. The case bottom plate is fixed to a heater and cooled by a fan or the like in a communication apparatus including the optical communication module. Although the present invention is particularly effective for optical communication modules handling signals of frequencies higher than 80 GHz, it is also applicable to optical modules of other uses.

These and other objects, features and advantages of the present invention will become more apparent in view of the following detailed description of the preferred embodiments in conjunction with the accompanying drawings.

### BRIEF DESCRIPTION OF THE DRAWINGS

FIG. 1 is a side sectional view showing a configuration of an embodiment of an optical communication module according to the present invention;
FIG. 2 is a top view showing a configuration of another embodiment of the optical communication module according to the present invention;
FIG. 3 is a top view showing a configuration of further another embodiment of the optical communication module according to the present invention;
FIG. 4 is a top view showing a configuration of another embodiment of the optical communication module according to the present invention;
FIG. 5 is a top view showing a configuration of another embodiment of the optical communication module according to the present invention;
FIG. 6 is a diagram showing for explaining interference between a semiconductor IC and lens;
FIGS. 7A and 7B are diagrams showing dispositions of optical elements, IC, and other components within a conventional optical module; and
FIG. 8 is a diagram showing the appearance of a semiconductor IC for high frequency waves.

### DESCRIPTION OF THE PREFERRED EMBODIMENTS

Hereinafter, embodiments of the present invention will be described using the accompanying drawings.

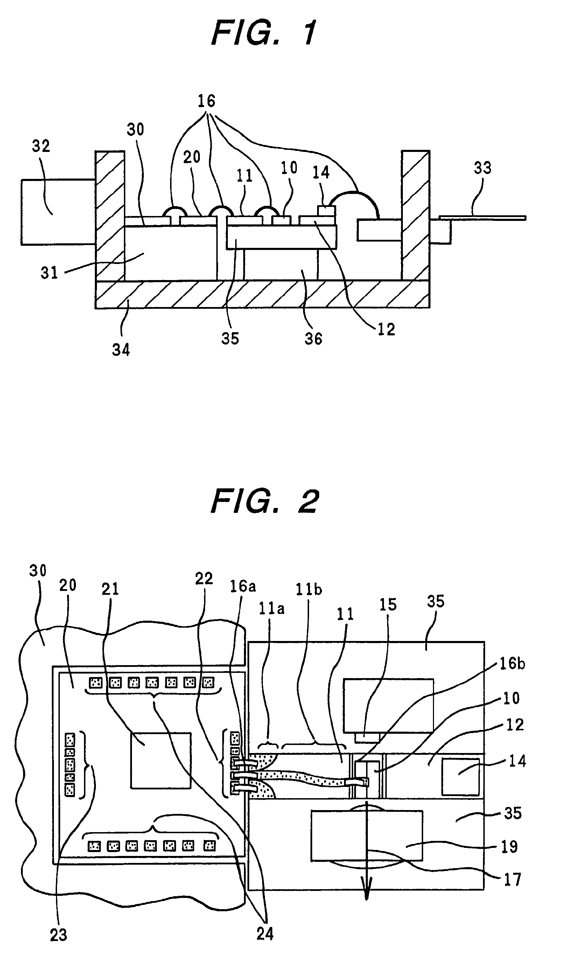

FIG. 1 is a side sectional view showing a configuration of an embodiment of an optical communication module according to the present invention.

A case 34 of the optical communication module contains a Peltier element 36 on which a metal stem 35 is mounted, and a metal block 31 on which a semiconductor IC 20 for driving the optical element and a substrate 30 are mounted. On the stem 35 is mounted a substrate 12 on which an optical element 10 such as a semiconductor laser, a wiring plate 11, and a thermistor 14 are mounted. A connector 32 and a lead 33 are provided outside the case 34. The substrate 30, semiconductor IC 20, wiring plate 11, optical element 10, thermistor 14, and the like are electrically connected through connecting wires 16 of metal wires or thin metal ribbon.

The connector 32 is a connector for inputting signals to the optical communication module; a coaxial connector suitable for high frequency transmission is used as the connector 32. A signal conductor of the connector 32 is connected to the substrate 30 within the case 34 and signals are inputted to the semiconductor IC 20 via the substrate 30. The case 34 is provided with plural lead wires 33 for electrical connections with the outside, which are connected with the thermistor 14, Peltier element 36, and the like.

This embodiment is characterized in that the wiring plate 11 is provided on the stem 35 on which the optical element 10 is mounted, connection between the semiconductor IC 20 and the optical element 10 is made via the wiring plate 11, and the stem 35 on which the wiring plate 11 is mounted, and the metal blocks are separated from each other.

Heat also travels from the semiconductor IC 20 to the wiring plate 11 through the connecting wires 16 along with electrical signals. If many thick and short wiring wires 11 are used for connection to increase high frequency characteristics, more heat would travel than with conventional optical modules. In this embodiment, however, heat traveling through the connecting wires 16 flows from the wiring plate 11 to the stem 35 without flowing into the optical element 10. Therefore, an increase in temperature due to heat from the semiconductor IC 20 causes no change in the characteristics of the optical element 10, so that it can maintain stable operation.

The wiring plate 11 is preferably made of a ceramic material that is small in dielectric loss and excellent in transmission characteristics of high frequency signals. A wiring pattern on the wiring plate 11 is formed by photo lithography. The wiring plate 11 and the stem are fixed to each other by solder (e.g., AuSn, etc., having a high melting point).

FIG. 2 is a partial top view of the case of the optical communication module of FIG. 1.

As input electrode pads 23 and output electrode pads 22 of the semiconductor IC 30, five pads are respectively provided for terminals for normal and anti-phase signals and ground terminals placed to surround them. On other sides of the semiconductor IC 20 are provided other electrode pads 24 for power and control. The input pads 23 and other electrode pads 24 are connected with the substrate 20 by metal wires or the like (not shown). Although, in this embodiment, the number of respective electrode pads of a signal input part and a signal output part of the semiconductor IC 20 is five, the present invention is limited to this number.

The output electrode pads 22 of the semiconductor IC 20 and the wiring plate 11 are electrically connected with each other by the connecting wires 16a. As the connecting wires 16a, ribbon-shaped wires are more desirable than circular sectional wires because inductance components are smaller. It is also desirable that connection between the input electrode pads 23 of the semiconductor IC 20 and the substrate 30 is also made by ribbon-shaped wires. The connecting wires 16a in FIG. 2 have three wires to connect signals in the form of coplanar transmission line.

The output electrode pads 22 of the semiconductor IC 20 are wired to the wiring plate 11 in the form of a coplanar transmission line in which signal lines and ground lines surrounding them are disposed on an identical plane. However, since the optical element 10 inputs signals on the top thereof and return them at the bottom thereof, it is desirable that connection to the optical element 10 is made using a micro-strip transmission line. Accordingly, it is desirable in terms of high frequency signal transmission line characteristics to make conversion from the coplanar transmission line to a micro-strip transmission line midway between the output electrode pads 22 of the semiconductor IC 20 and the optical element 10. A coplanar micro-strip conversion region formed on the wiring plate 11 of FIG. 2 is a wiring pattern region formed for this purpose. Namely, a wiring pattern on the wiring plate 11 in this embodiment consists of a coplanar transmission line from the semiconductor IC 20, followed by a coplanar microstrip conversion region 11a, and followed by a micro-strip transmission line region 11b up to the optical element, thereby achieving satisfactory transmission characteristics of high frequency signals. The wiring pattern on the wiring plate is a transmission line subjected to impedance matching. A transmission line of the wiring plate 11 and the optical element 10 are connected with each other by connecting wires 16b. As the wires 16b, ribbon-shaped wires are more desirable than circular sectional wires in terms of high frequency transmission characteristics, as described above.

The optical element 10 emits light in the direction of an optical axis 17 and the direction indicated by the arrow is forward. In front of the optical element 10 is disposed an optical connecting lens 19 for transforming emitted light into parallel light or convergent light to enter the light to an optical fiber. The distance between the lens 19 and the optical element 10 is from 0.2 to 0.4 mm for an optical connecting lens generally used. The wiring plate 11 is of lengthwise extending shape such as a rectangle and is disposed so that the direction of the wiring pattern is almost perpendicular to the direction of the optical axis 17, and the wiring plate 11 is mounted on the stem 35 so that the side of the wiring plate 11 toward the optical axis is in almost same position as the front of the optical element 10. Because of this construction, there occurs no interference among the lens 19, lens tube (or lens holder) (not shown), and the wiring plate 11. If the semiconductor IC is directly wired to the optical element by wires as in the prior art, where the output electrode pads are disposed in the center of a side of the IC chip as shown in FIG. 2, the IC is disposed at a distance of at least the radius of the lens or lens tube to prevent interference between the IC and the lens, and is connected by a wire therefrom. In such a case, the length of the connecting wire is at least 1 mm (for a lens radius of 1 mm) and reaches as long as 2 mm if a lens tube exists. The inductance of such a long wire reaches as high as 0.8 or 1.6 nH and the impedance of the inductance is 25 or 50 ohms at a frequency of 5 GHz, making use of the optical module difficult in terms of high frequency transmission.

On the metal stem 35, the thermistor 14 is disposed in opposed relation to the wiring plate 11 with respect to the optical element 10 via the substrate 12. On the metal stem 35, a photo-diode 15 for monitoring is disposed in opposed relation to the lens 19 with respect to the optical element 10 via the substrate 12.

According to this embodiment, heat flowing through the connecting wires 16 from the semiconductor IC 20 flows into the stem 35 through the wiring plate 11 without flowing into the optical element 10. Therefore, an increase in temperature due to heat from the semiconductor IC 20 causes no change in the characteristics of the optical element 10, which can maintain stable operation. Connection can be made by many thick and short wiring wires 11 to increase high frequency characteristics.

Where the wiring plate according to this embodiment is used, if wiring on the wiring plate is subjected to impedance matching, there occurs no problem with the length of the wirings. Therefore, according to this embodiment, the semiconductor IC 20 can be disposed without taking interference with the lens 19 into account, so that parts can be mounted within the optical module without tightness.

The shortest length of the wiring plate 11, which is determined from the standpoint of preventing interference between the IC and the lens (or lens tube), is the radius of the lens tube.

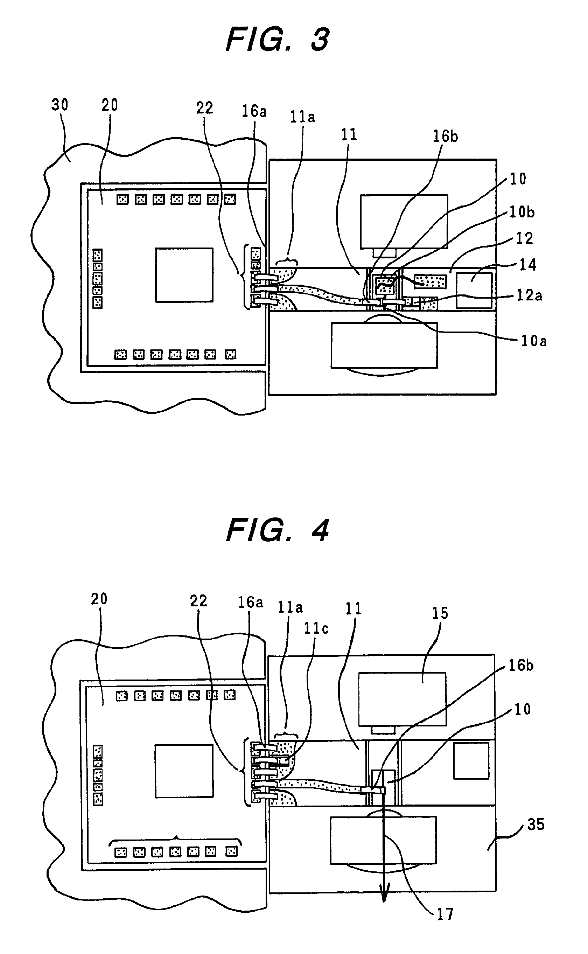

FIG. 3 is a partial top view showing a configuration of another embodiment of the optical communication module according to the present invention.

In this embodiment, the optical element 10 is integrated with an electroabsorption modulator integrated with a laser element, and a resistor is connected in parallel with the optical element 10. In the case where the optical element 10 is integrated with the laser element and the electroabsorption modulator, at least two electrodes on the top of the optical element 10 are required for a laser connecting terminal 10b and a modulator connecting terminal 10a, as shown in FIG. 3.

Since impedance of the optical element used in the optical communication module is usually different from that of transmission line, circuit elements such as resistors are often connected in parallel or in series to match impedance of wiring on the wiring plate 11. An electroabsorption modulator used for high-speed signal transmission often has higher impedance than 50 ohms, which are impedance of transmission lines often used. Therefore, a resistor is connected in parallel with the optical element to match impedance usually in a manner that disposes a resistance element used for load matching on the periphery of the optical element and makes connection between a connecting pad on the top of the optical element and an electrode pad of the resistance element by a wire.

In this embodiment, a terminal resistance 12a used for load matching is formed on the substrate 12 so that it is connected with a modulation element connecting terminal a of the optical element 10 by a wire. Although, in this embodiment, the terminal resistance 12a used for load matching is formed on the substrate 12, the resistance may be formed or mounted on the wiring plate 11. Function parts that are substantially identical with the components in the embodiments shown in FIGS. 1 and 2 are identified by the same numbers and will not be described. This is also the same for other embodiments.

FIG. 4 is a top view showing a configuration of another embodiment of the optical communication module according to the present invention.

This embodiment is characterized in that the semiconductor IC 20 is connected with the wiring plate 11 by five wires. There is a case where the semiconductor IC 20 having normal and anti-phase outputs may increase in electrical characteristics and stability when it is connected to loads that are equal in normal and anti-phase outputs. In such a case, since only one of the outputs is connected to the optical element 10, it is desirable in terms of operation of the semiconductor IC 20 to connect another output not connected to the optical element 10 to a loading resistance. Since the terminals 22 for normal and anti-phase outputs of the semiconductor IC 20 are disposed in proximity, connection may be easily made by forming a loading resistance in the wiring plate intervening between the semiconductor IC 20 and the optical element 10. Namely, in this embodiment, by forming a terminal resistance 11c serving as a circuit elements on the wiring plate 11, the electrical characteristics and stability of the semiconductor IC 20 are increased.

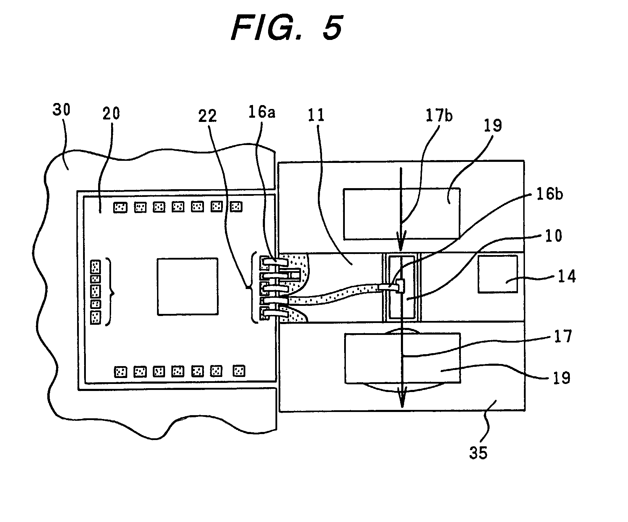

FIG. 5 is a top view showing a configuration of another embodiment of the optical communication module according to the present invention. This embodiment is different from the embodiment described previously in that the optical element 10 is an optical modulating element and an optical connecting lens is disposed also at the rear (upper side of the drawing) of the element 10. Since the optical element 10 of optical modulation type has the optical connecting lenses 19 disposed in front of and at the rear of the element 10, a member connected to the optical element 10 must be disposed between the lenses 19. The interval between the lenses 19 is the length of the optical element plus twice a lens operating distance. For example, if the length of the optical element is 0.6 mm, the interval between the lenses is a little over 1 mm. Although usually it is extremely difficult to dispose a semiconductor IC in this interval, the embodiment according to the present invention, that is, mounting a wiring plate between the lenses is possible, and an optical communication module can be easily constructed.

According to the present invention as described above, an optical communication module having excellent high frequency characteristics can be provided in which an optical element is free from influence of heat from a semiconductor IC, no interference occurs between the semiconductor IC and optical connecting lenses, and the optical element and the semiconductor IC are included in one case. Although the embodiments have been described with regard to an optical communication module, which is an effective application field of the present invention, the present invention can be used as an optical module of fields requiring high speed operation.

While the present invention has been described above in conjunction with the preferred embodiments, one of skill in the art would be enabled by this disclosure to make various modifications to this embodiments and still be within the scope and spirit of the invention as defined in the appended claims.

## Claims

1. An optical module including an optical element (10) and a semiconductor IC (20) for driving the optical element in the same case,
wherein a wiring plate (11) for connecting signals between the optical element (10) and the semiconductor IC (20) is mounted on a metal stem (35).

2. The optical module according to claim 1, wherein the metal stem (35) and a metal block (31) on which the semiconductor IC (20) is mounted are separated as distinct parts.

3. The optical module according to claim 1, wherein a plurality of wires (16) connect the semiconductor IC (20) and the wiring plate (11).

4. The optical module according to claim 3, wherein the wiring plate (11) has a coplanar line connected to the plural wires (16a, 16b) and a micro-strip line coupled to the coplanar line at one end thereof and connected to an electrode of the optical element (10) at another end thereof.

5. The optical module according to claim 1, wherein the wiring plate (11) is of lengthwise extending shape and a lengthwise direction of the wiring plate is almost perpendicular to the optical axis (17) of the optical element (10).

6. The optical module according to claim 1, wherein a wiring structure of the wiring plate (11) is a transmission line subjected to impedance matching.

7. The optical module according to claim 1, wherein a circuit element is mounted on the wiring plate (11).
